(19) Europäisches Patentamt

European Patent Office

Office européen des brevets

(11) EP 0 098 070 B2

(12) NEW EUROPEAN PATENT SPECIFICATION

(45) Date of publication and mention
of the opposition decision:
**13.12.2000 Bulletin 2000/50**

(45) Mention of the grant of the patent:
**18.05.1988 Bulletin 1988/20**

(21) Application number: **83303373.1**

(22) Date of filing: **10.06.1983**

(51) Int. Cl.⁷: **G02F 1/137**, G02F 1/133

(54) **Liquid crystal devices**

Flüssigkristrall-Vorrichtungen

Dispositifs à cristal liquide

(84) Designated Contracting States:
**AT BE CH DE FR IT LI NL**

(30) Priority: **29.06.1982 GB 8218821**

(43) Date of publication of application:
**11.01.1984 Bulletin 1984/02**

(73) Proprietor:
**Secretary of State for Defence
in Her Britannic Majesty's Gov.
of the United Kingdom of
Great Britain and Northern Ireland
London SW1A 2HB (GB)**

(72) Inventors:
• **Waters, Colin Martin
Malvern Worcestershire (GB)**
• **Raynes, Edward Peter
Malvern (GB)**

(74) Representative:
**Bowdery, Anthony Oliver et al
Defence Evaluation & Research Agency,
D/IPD Formalities,
A4 Bldg, Rm G016,
Ively Road
Farnborough, Hants GU14 0LX (GB)**

(56) References cited:
**EP-A- 0 043 603       FR-A- 2 356 173
US-A- 4 272 162**

• **PATENT ABSTRACTS OF JAPAN, vol. 6, no. 46,
March 24, 1982, page (P-107)(924), & JP-A-56-
162 722**
• **IEEE TRANSACTIONS ON ELECTRON DEVICES,
vol. ED-28, no. 6, June 1981, NEW YORK (US),
R.L. HUBBARD et al.: "Optical-bounce removal
and turnoff-time reduction in twisted-nematic
displays", pages 723-725.**
• **IEEE TRANSACTIONS ON ELECTRON DEVICES,
vol. ED-28, no. 6, June 1981, NEW YORK (US), K.
SUZUKI et al.: "A multiplexed phase-change-
type color LCD", pages 719-723.**

EP 0 098 070 B2

**Description**

This invention relates to liquid crystal devices. Such devices typically comprise a thin layer of a liquid crystal material contained between glass slides. Electrode structures on the slides allow an electric field to be applied across the layer causing a re-ordering of the liquid crystal molecules to an ON-state. On removing the electric field the molecules relax back to their OFF state.

There are three known types of liquid crystal material, nematic, cholesteric, and smectic each having a different molecular ordering.

The present invention utilises a long-pitch cholesteric mixture in which the molecules naturally adopt a helical structure with the helix axes normal to the plane of the layer. The long-pitch cholesteric mixture is formed by mixing typically a few percent of a cholesteric liquid crystal material with a nematic liquid crystal. The pitch of the cholesteric mixture can be controlled by adjusting the concentration of the cholesteric liquid crystal material.

One known device is the twisted nematic device which uses a thin layer of a nematic material between glass slides. The slides are uni-directionally rubbed and assembled with the rubbing directions orthogonal. The rubbing gives a surface alignment to the liquid crystal molecules resulting in a progressive 90° twist across the layer. When placed between polarizers, with their optical axis perpendicular or parallel to a rubbing direction the device rotates the plane of polarized light in its OFF state and transmits without rotation in the ON state. Small amounts of cholesteric have been added to the nematic material to ensure the 90° twist is of the same sense across the whole area of the device as explained in GB-A-1,472,247 and 1,478,592.

A known type of device employing short-pitch cholesteric material is the phase change device. In its OFF, zero applied voltage, state the material is scattering to light. The cholesteric pitch is very small in comparison to the layer thickness. When an above threshold voltage is applied across the layer its molecules rotate from their helical structure to lie parallel to the applied field. This is similar to the ON state of a positive nematic and is light transparent. On removing the voltage the material relaxes back to its light scattering OFF state. No cell wall surface alignment is necessary with this type of device. An advantage of this device is the fast turn OFF time compared with the twisted nematic device and wide angle of view.

Another device is described in US 4,143,947 and shows a twisted nematic type of cell incorporating an amount of an optically active material, e.g. a cholesteric liquid crystal material. This provides a natural pitch greater than the material layer thickness but smaller than four times that thickness. The device cell walls are surface treated to provide alignment and the alignment directions arranged to give a progressive molecular twist of 90° or multiples thereof, ie 270°, 450° etc. A typical layer thickness is 10 to 20μm. The particular patch and layer thickness ratio gives reduced decay time, i.e. the time taken to turn from ON to OFF after removal of an applied voltage.

Another type of cell utilises a cholesteric material whose pitch equals the layer thickness. With homogeneous boundary conditions a plan state is induced with a $2\pi$ rotation of the director across the layer. Inclusion of a pleochroic dye produces absorption of light in the OFF state. Application of a voltage re-orientates the liquid crystal and dye molecules giving higher transmission in the ON state. As the voltage is increased to just above threshold a scattering texture is formed, which clears after a further, substantial, increase of voltage to give the ON state. As the voltage is reduced there is a rapid reduction in transmission at the threshold voltage. The device therefore always shows significant hysteresis which is present irrespective of the rate of increase of voltage. This hysteresis limits the multiplexibility of this device. This device is described in I.E.E.E. Trans. on Electron Devices, Vol. ED 28 No. 6, June 1981, pp. 719-823.

Consideration has been given to the multiplexability of Guest-Host displays in Journal Appl. Phys. 49(7), July 1978 pages 4277-4279 and JP-A-56 168 636

It has now been found that certain cholesteric liquid crystal cells incorporating a pleochroic dye and having a twist of less than or equal to $3\pi/2$ exhibit a sharp transmission-voltage characteristic for rapidly increasing voltages, without hysteresis. A slow increase in voltage may still produce some hysteresis.

According to this invention a liquid crystal device incorporates an amount or a pleochroic dye to distinguish between switched states at the device, having

a layer of a long pitch cholesteric liquid crystal material of thickness (d) less than 20μm and positive dielectric anisotropy and which contains the pleochroic dye

the ratio at the layer thickness (d) divided by the pitch (p) of the liquid crystal material being more than 0.5 and less than 0.75,

two cell walls bearing electrode structures which are arranged as a first series of m separate electrodes on one wall and a second series of n separate electrodes on the other wall, forming an m x n matrix of separate addressable elements, the cell walls being surface treated to align the liquid crystal molecules at the cell wall surface along an alignment direction (R) and with a substantially equal tilt angle to the surface on both cell walls in a tilted homogeneous structure,

the surface alignment and the natural pitch of the liquid crystal material being arranged to provide a progressive molecular twist of greater than $\pi$ and equal to or less than $3\pi/2$ radians across the layer, with a uniform tilt direction, the elastic and dielectric constants of the material together with the surface alignment and natural pitch of the material being arranged to provide a sharp transmission voltage characteristic in combination with substantially zero hysteresis,

driver circuits for repetitively applying voltages from a voltage source to the electrodes to RMS multiplex address each addressable element, and a logic circuit controlling the driver circuits,

and is switchable directly between a light transmissive ON state and a light absorbing non transmissive OFF state in which the ratio of the RMS ON voltage V2 to OFF voltage V1 is 1.165 or less at 20°C, and is highly multiplexible with $n \geq 40$.

The surface alignment treatment results in a molecular tilt of between 0° and 30° or more but less than 90° (homeotropic alignment). A tilt of less than say 5° e.g. 2° may be termed low tilt and between say 5° and 70° termed a high tilt.

The device may operate in a transmission mode or with a reflector in a reflective mode both with or without neutral or coloured polarisers.

Two or more devices may be arranged in series. This arrangement may use different colour dyes in each device so that a total of three colours may be observed. Alternatively the dyes may be similar so that a single colour of enhanced contrast between OFF and ON states is obtained. Furthermore each cell may have a different absorption so that eight values of absorption or grey scale are obtained.

Usually the pitch of a cholesteric liquid crystal increases with increasing temperature. The device may be enhanced by either

(i) choosing a liquid crystal material, or mixture of materials, with small or zero temperature dedpendence of pitch to maintain the optimum d/p over a wide temperature range; or

(ii) choosing a liquid crystal whose pitch decreases with increasing temperature to partially or wholly compensate for variations in threshold voltage with temperature.

Additionally, or instead, the liquid crystal temperature may be sensed and the addressing voltage levels altered accordingly. One method of sensing is described in GB-A-2,012,093.

The invention will now be described by way of example only with reference to the accompanying drawings of which:-

Figure 1 is a plan view of a matrix multiplex addressed liquid crystal display;

Figure 2 is a cross section of a display such as Figure 1 used in a transmissive mode;

Figure 3 is similar to Figure 2 but operates in a reflective mode;

Figures 4, 5 are schematic views of parallel aligned cell walls for explaining the matching of alignment;

Figure 6 is a diagrammatic view showing matching surface alignment and cholesteric twist directions;

Figure 7 is a graph transmission of voltage characteristic for $3\pi/2$ single polarizer dye display with low tilt surface alignment;

Figure 8 is similar to Figure 7 but for a high tilt cell;

Figure 9 is a graph showing cell switching voltages against d/p ratio for a low tilt cell surface alignment;

Figure 10 is a graph showing cell switching voltages against d/p ratio for a high tilt cell surface alignment.

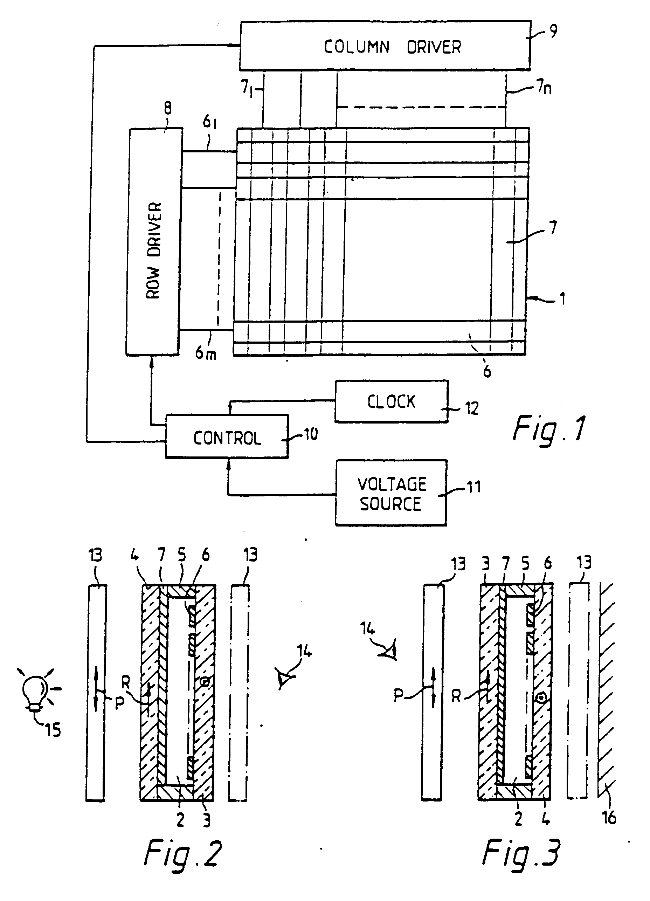

The display of Figures 1, 2 comprises a liquid crystal cell 1 formed by a layer 2 of cholesteric liquid crystal material contained between glass walls 3, 4. A spacer ring 5 maintains the walls typically 6μm apart. Additionally numerous short lengths of 6μm diameter glass fibre may be dispersed in the liquid crystal material to maintain an accurate wall spacing. Strip like row electrodes $6_1$ to $6_m$ e.g. of $SnO_2$, are formed on one wall 3 and similar column electrodes $7_1$ to $7_n$ formed on the wall 4. With m-row electrodes and n-column electrodes this forms an m x n matrix of addressable elements. Each element is formed by the interaction of a row and column electrode.

A row driver supplies voltage to each row electrode 6. Similarly a column drive 9 supplies voltages to each column electrode 7. Control of applied voltages is form a control logic 10 which receives power from a voltage source 11 and timing from a clock 12.

In liquid crystal displays the ON and OFF states are visibly different. This is used for example to show digits as in watches, etc.

There are two conventional techniques for multiplex addressing displays, a so-called slow scan and a fast scan or r.m.s. mode. In the slow scan mode each element in a matrix is addressed with a voltage for a time sufficient to turn that element ON. This is repeated for each line of the matrix and then the whole matrix is re-addressed or refreshed repeatedly. In the fast scan mode each element required to be ON is addressed once per complete refresh cycle with a higher voltage level for a time less than the response time of the liquid crystal material and during the remainder of the refresh cycle receives a lower voltage. These voltages are set so that the r.m.s. level over many cycles is sufficiently high to maintain the required elements ON. Elsewhere the r.m.s. level is insufficient to cause elements to be in the ON state.

As an example of fast scan addressing an A.C. row voltage $V_R$ is applied to each row in turn. As each row is addressed column voltages $\pm V_C$ are applied to appropriate column electrodes, the $\pm$ signs refer to the phase of the A.C. signal e.g. at 1KHz. This is repeated for each row until the whole cell is addressed. The process is repeated for the whole cell at a frame rate typically of 50Hz for a 10 line matrix whilst information is to be displayed. Each element required to be ON receives $V_R + V_C$ for one time interval per complete addressing cycle, i.e. frame time, and $\pm V_C$ for other time intervals. The r.m.s. value of $V_R + V_C$ and $n-1(\pm V_C)$ is arranged to equal a desired $V_2$ level. Elements not required to be ON receive $V_C$, or $V_R$-$V_C$ for all time periods. The r.m.s. value of $V_C$, $V_R$-$V_C$ is $V_1$. The display is formed collectively by ON elements receiving $V_2$ volts on a background of OFF elements receiving $V_1$ volts.

Alternatively the display may be collectively formed by OFF elements on a background of ON elements.

To multiplex address a display having a large numbers of lines the ON/OFF transmission voltage characteristic must be very sharp, since the OFF elements in the display have to be held at a voltage $V_1$ which is only slightly lower than the ON voltage $V_2$. The number of lines, n, (or level of multiplexing) that can be addressed can be related to the ratio of $V_1$, $V_2$ voltages. For example for the optimised Alt and Pleschko addressing scheme (I.E.E.E. Trans. ED Vol. ED 21 1974 pp 146-155),

$$\left(\frac{V_2}{V_1}\right)^2 = \frac{\sqrt{n}+1}{\sqrt{n}-1}$$

Decreasing $V_2$-$V_1$ increases the value of n.

Present displays using the twisted nematic or Schadt Helfrich effect without dyes can be multiplexed about 32 ways (n = 32). However dyed displays have previously been limited to around n = 3. As explained below displays of the present invention provide sharp ON/OFF transmission characteristics and hence high values of n.

The display of Figure 1 has been arranged as an orthogonal m x n matrix but may be arranged in other layouts. For example an eight bar digit can be displayed by a three row column matrix and multiplex addressed. The digits can be extended to a row of digit by adding column electrodes in groups of three.

For a transmissive display Figure 2 a polariser 13 may be arranged behind, or in front of the cell 1. The polarisation axis P of the polariser is parallel with the surface alignment direction R (see below) on the adjacent cell walls. An observer 14 views the display illuminated by e.g. a tungsten bulb 15.

Figure 3 shows a display having a reflector 16 behind the cell. A polariser 13 is mounted in front of or behind the cell 1 with its polarisation axis P parallel to the alignment direction R of the adjacent wall.

As seen in Figure 2, 3 the compounds are separated. In practice they are in contact with one another. For example the reflector 16 may be a layer of aluminium sprayed or evaporated onto the rear cell wall 4.

The cholesteric material used naturally forms a helical ordering in the layer 2 with the helical axis normal to the walls 3, 4.

Liquid crystal molecules can be aligned at the cell wall surface by various alignment techniques. For example coating the surface with polyvinyl alcohol and unidirectional rubbing with a soft tissue. This results in a molecular alignment along the rubbing direction and with a tilt of the molecules of about 2° to the surface. Alternatively, as described in GB-A-1,472,247, 1,478,592, 1,545,084 and 2,007,865 $MgF_2$ may be developed onto the walls. Depending on the angle of evaporation, single or sequentially, the molecules are aligned and the angle of tilt may vary between zero and 30° or more.

The cell is constructed to have a $3\pi/2$ molecular twist across the layer. Thus the two alignment directions on the assembled cell must be orthogonal. The cholesteric pitch p is chosen so that for a layer thickness d the molecules twist across the layer by $3\pi/2$ i.e. d/p is 0.75. Such a value of d/p matches the natural cholesteric twist to the surface alignment twist. It has been found that values of d/p may be more than 0.5 and less than 0.75.

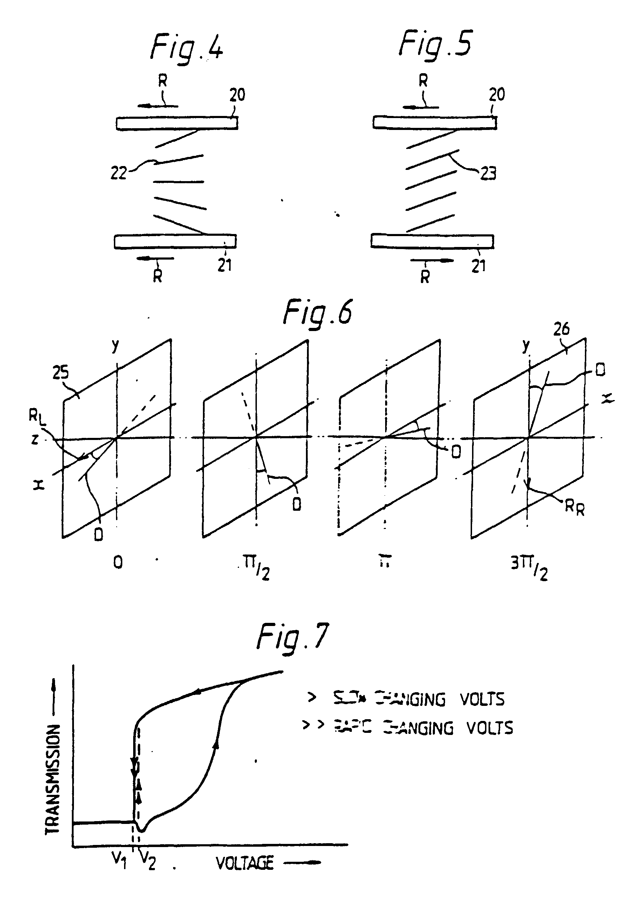

As noted above surface alignment by rubbing results in a surface molecules tilt of about 2°. The relative orientation of the two rubbing directions must be matched to the natural cholesteric rotation which may be left or right handed. The need for this matching is explained with reference to Figures 4, 5.

In Figure 4 cell walls 20, 21 are unidirectionally rubbed and assembled with the rubbing R in the same directions. For this cell the liquid crystal material is a nematic material, it is not optically active i.e. has no twisted structure. The liquid crystall molecules 22 are splayed, they are inclined towards the centre of the layer. When a voltage is applied the molecules rotate to align normal to the walls. Some molecules rotate clockwise others anti-clockwise to the ON state. This is the problem of reverse tin referred to in the prior art. It gives rise to a patchy appearance to the display.

Figure 5 is similar to Figure 4 except that the rubbing directions are opposite. This results in liquid crystal molecules 23 all inclined in the same direction towards one wall in the OFF state. When the voltage is applied all molecules rotate in the same direction to give a uniform appearance.

Figure 6 shows the cholesteric twist and alignment are matched. Left plane 25 and right plane 26 have rubbing directions $R_L$ and $R_R$ respectively. Viewed from the left $R_R$ is rotated clockwise by $3\pi/2$ from $R_L$. Passing from left to right the director is rotated clockwise by $3\pi/2$. The tilt angle across the centre of the layer is uniform. Intermediate planes are indicated for $\pi.2$ and $\pi$ rotation. For a cholesteric that twists anticlock-wise on passing through the layer the rubbing direction $R_L$ is reversed. The orientation of the rubbing directions is critical. If one of the rubbing directions is opposite to that indicated in Figure 6 then there is a significant degradation in the sharpness of the electra-optic transmission curve.

The transmission against applied voltage characteristic for a low tilt (e.g. 2°) 6$\mu$m cell with a $3\pi/2$ twist incorporating a dye and using a single polariser shown in Figure 7. The lower curve shows transmission changes with a slowly increasing voltage, the upper curve shows transmission changes with a decreasing voltage. The decreasing voltage curve is obtained for both slow and fast reduction in voltage. A surprising affect is that for a rapid increase in voltage from $V_1$ to $V_2$, marked by a broken line, the transmission charge closely follows the upper curve. $V_1$ is below the steep ramp of the two closely spaced lines and $V_2$ is jut above it. The display of Figure 1 is operated using R.M.S. values of $V_1$ and $V_2$ for OFF and ON elements respectively.

In the OFF state very little light is transmitted whilst substantially all of the light is transmitted in the ON state. For a liquid crystal material having a reasonably high birefringence (e.g. $\Delta n \geq 0.15$) there is guiding of polarised light in the OFF state. If light from a source enters the layer polarised along the molecular axis of the liquid crystal and dye molecules and in a direction normal to this axis, it is both guided and absorbed across the layer. When the birefringence is low (e.g. $\Delta n \geq 0.15$) there is less guiding of polarised light, and a larger fraction of unpolarised light may be absorbed by the dye molecules allowing the device to be operated without a polariser.

When the cell is in the ON state the liquid crystal and due molecules are re-oriented towards the normal to the walls, provided the material has positive dielectric anisotropy ($\Delta \epsilon > 0$). In this condition little light is absorbed by the dye.

For high birefringence materials ($\Delta n \geq 0.15$) it is preferable to use a single polariser to increase the absorption in the OFF state. For low birefringence ($\Delta n \geq 0.15$) it is preferable to use no polarisers to produce a brighter ON state.

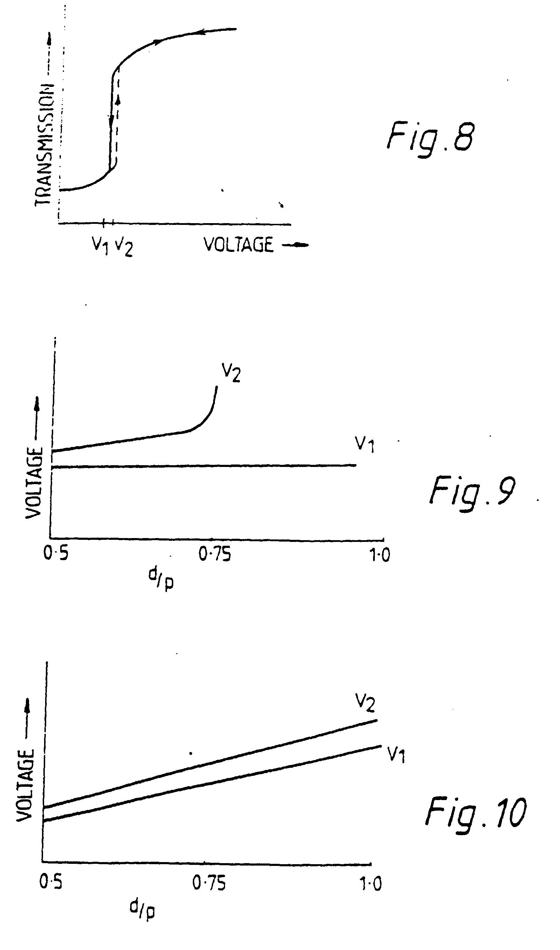

Figure 9 shows the effect of varying the ratio d/p in the low tilt cell whose transmission characteristics are shown in Figure 7. As the layer thickness d to cholesteric pitch p increases above 0.5 the value of $V_1$ remains reasonably constant. However the value of $V_2$ increases gradually up to about d/p of 0.75 and then increases markedly. Thus for low tilt cells the value of d/p is preferably more than 0.5 and less than 0.75. The additional strain induced by the surfaces at values of d/p < 0.75 for a $3\pi/2$ twist, reduces the tendency of the cell to form a scattering texture just above the threshold voltage $V_1$.

Cells of $3\pi/2$ twist with surface alignments having high tilts, e.g. 30°, have a transmission characteristic shown in Figure 8. For a p plied voltages above $V_1$ the transmission changes rapidly with little hysteresis both for slowly and rapidly increasing and decreasing voltages. For this high tilt cell the variation of $V_1$ and $V_2$ with varying d/p is shown in Figure 10. Both $V_1$ and $V_2$ increase steadily with increasing d/p.

The invention may be operated as a multiplexed matrix array as described above with reference to Figure 1 or as a fixed legend display.

This device may be operated in a two-frequency mode where the cell is switched ON by a low frequency signal $f_1$ and switched OFF by a high frequency $f_h$. The signal $f_1 < f_c < f_h$ where $f_c$ is the frequency at which the dielectric anisotropy of the liquid crystal material changes sign being positive at low frequency to negative at high frequency.

Examples of suitable liquid crystal materials are:-

Catalogue Nos. E63, E70, E43, CB 15 available from B.D.H. Ltd., Poole, Dorset, England. Biphenyl liquid crystal materials are described

in GB-A-1,433,130 and GB-A-2,031,010. ZLI 1132 available from E. Merck, Darnstadt, W. Germany.

Suitable dyes are anthraquinone dyes described in GB-A-2,011,940, 2,082,196, 2,081,736, 2,093,475 available from I.C.I. Ltd., or from B.D.H. Chemicals Ltd. as D82, D86.

Example 1

Materials E63 + 1.5% by weight of CB15 + 1% Dye D82 (B.D.H.)
Cell thickness 6 $\mu$m, low tilt alignment
$V_2/V_1$ at temperature T = 20° = 1.165
Maximum number, n, of lines which may be multiplexed using the Alt & Pleshko technique: n = 40.

$$\frac{1}{V}\left(\frac{dV}{dT}\right) \simeq 0.5\% \text{ per } °C$$

Response time

$$t_{ON} \simeq 500 \text{ ms}$$
$$t_{OFF} \simeq 300 \text{ ms}$$

Contrast ratio 4:1.

The angle of view is extremely good with or without a polariser.

Example 2

Liquid crystal cell thickness 8 $\mu$m, low tilt alignment.

Material ZLI 1289 (Merck)
+ ME 33 30% by weight (Merck)
+ CB 15 1% by weight (B.D.H.)
+ D 82 dye 1% by weight (B.D.H)

$$(V_2/V_1)_{T = 20°} = 1.160$$

n = 46

Example 3

Cell thickness 8 $\mu$m low tilt alignment.

Material (B.D.H.) 3/5/7 CB
+ CB 15 1% by weight
+ D 82 dye 1% by weight

$$(V_2/V_1)_{T = 20°} = 1.125$$

n = 72

Example 4

Cell thickness 8 $\mu$m, high tilt alignment.

Material ZLI 1557 (Merck)
+ CB 15 0.9% by weight (B.D.H.)
+ D 82 dye 1% by weight (B.D.H.)

$$(V_2/V_1)_{T = 20°} = 1.042$$

n = 590

Example 5

Cell thickness 8 $\mu$m, high tilt alignment.

Material ZLI 1289 (Merck)
+ BCO Ester 30% by weight (B.D.H.)
+ CB 15 1.1% by weight (B.D.H.)
+ D 82 dye 1% by weight (B.D.H.)

$$(V_2/V_1)_{T=20°} = 1.075$$

n = 190

Example 6

Cell thickness 8 $\mu$m, high tilt alignment.

Material (B.D.H.) E 120
+ CB 15 0.75% by weight
+ D 82 dye 1% by weight

$$(V_2/V_1)_{T=20°} = 1.08$$

n = 170

Table of properties of liquid crystal materials.

| Material | $\dfrac{k_{33}}{k_{11}}$ | $\dfrac{\Delta\varepsilon}{\varepsilon_1}$ |
|---|---|---|
| ZLI 1289 (Merck) | 2.01 | 2.28 |
| ZLI 1289 + 30% ME 33 | 1.23 | 1.87 |
| ZLI 1289 + 30% BCO Ester | 1.30 | 2.0 |
| E 120 | 1.01 | 1.09 |
| 3/5/7 CB | 1.55 | 2.91 |
| E 63 | 1.93 | 3.19 |
| 3/5/7 PECH | 2.08 | 2.7 |

ME 33 is $C_3H_7 - \langle O \rangle - COO - \langle O \rangle - C_3H_7$

BCO Ester is $C_3H_7 - \langle \, \rangle - COO - \langle O \rangle - C_5H_{11}$   50%

$C_5H_{11} - \langle \, \rangle - COO - \langle O \rangle - C_5H_{11}$   50%

3/5/7 CB is $C_5H_7$—⟨O⟩—⟨O⟩—CN    30%

$C_5H_{11}$—⟨O⟩—⟨O⟩—CN    40%

$C_7H_{15}$—⟨O⟩—⟨O⟩—CN    30%

3/5/7 PECH is $C_5H_7$—⟨H⟩—$C_2H_4$—⟨O⟩—CN   30%

$C_5H_{11}$—⟨H⟩—$C_2H_4$—⟨O⟩—CN  40%

$C_7H_{15}$—⟨H⟩—$C_2H_4$—⟨O⟩—CN  30%

3/5/7 CNPYR is $C_5H_7$—⟨O⟩—⟨O⟩—CN    30%

$C_5H_{11}$—⟨O⟩—⟨O⟩—CN    40%

$C_7H_{15}$—⟨O⟩—⟨O⟩—CN    30%

CB 15 is $CH_3$ $CH_2$ $\overset{|}{C}HCH_2$—⟨O⟩—⟨C⟩—CN
                              $CH_3$

## Claims

1. A liquid crystal device incorporating an amount of a pleochroic dye to distinguish between switched states of the device, having

   a layer (2) of a long pitch cholesteric liquid crystal material of thickness (d) less than 20μm and positive dielectric anisotropy which contains the pleochroic dye
   the ratio of the layer thickness (d) divided by the pitch (p) of the liquid crystal material (2) being more than 0.5 and less than 0.75,
   two cell walls (3, 4) bearing electrode structures (6, 7) which are arranged as a first series of m separate electrodes (6; $6_1$ to $6_m$) on one wall (3) and a second series of n separate electrodes (7; $7_1$ to $7_n$) on the other wall (4), forming an m x n matrix of separate addressable elements, the cell walls being surface treated to align the liquid crystal molecules (23) at the cell wall surface along an alignment direction (R) and with a substantially equal tilt angle to the surface on both cell walls in a tilted homogeneous structure,
   the surface alignment and the natural pitch of the liquid crystal material (2) being arranged to provide a progressive molecular twist of greater than $\pi$ and equal to or less than $3\pi/2$ radians across the layer (2), with a uniform tilt direction,
   the elastic and dielectric constants of the material (2) together with the surface alignment and natural pitch of the material (2) being arranged to provide a sharp transmission voltage characteristic in combination with substantially zero hysteresis,

driver circuits (8, 9) for repetitively applying voltages from a voltage source (11) to the electrodes (6, 7) to RMS multiplex address each addressable element, and a logic circuit (10) controlling the driver circuits (8, 9), and being switchable directly between a light transmissive ON state and a light absorbing non transmissive OFF state in which the ratio of the RMS ON voltage V2 to OFF voltage V1 is 1.165 or less at 20°C, and is highly multiplexible with n ≥ 40.

2.  A device according to claim 1 in which the device has at least one polariser (13).

3.  The device of any of claims 1 or 2 having substantially equal low tilts on both cell wall surfaces.

4.  The device of any of claims 1 or 2 having substantially equal high tilts on both cell wall surfaces.

5.  The device of claim 2 further comprising a reflector (16) optically behind the cell walls (3, 4).

6.  The device of any of the preceding claims arranged optically in series with at least one other device of claims 1 to 5 with different coloured dyes in the different devices.

7.  The device of any of claims 1 to 6 having temperature compensation which comprises either alone or in combination:

    a) the liquid crystal material having small or zero temperature dependence of pitch; or
    b) the liquid crystal material having decreasing pitch with increasing temperature; or
    c) means for sensing the crystal temperature and altering voltage levels accordingly

8.  The device of any one of claims 1 to 7 in which the liquid crystal material (2) has surface induced strain.

9.  The device of claim 8 characterised in that the values of the natural pitch (p) of the liquid crystal material and the thickness (d) of the layer are chosen to yield a thickness to pitch ratio (d/p) less than that which would match the natural cholesteric pitch for matching to the surface alignment twist.

**Patentansprüche**

1.  Flüssigkristallvorrichtung, die eine Menge an einem pleochroitischen Farbstoff zur Unterscheidung zwischen Schaltzuständen der Vorrichtung enthält, mit

    einer Schicht (2) eines cholesterischen Flüssigkristallmaterials mit großer Ganghöhe und einer Dicke (d) von weniger als 20 µm und positiver dielektrischer Anisotropie, welche den pleochroitischen Farbstoff enthält, wobei das Verhältnis der Schichtdicke (d) dividiert durch die Ganghöhe (p) des Flüssigkristallmaterials (2) mehr als 0,5 und weniger als 0,75 beträgt, zwei Zellwänden (3, 4), die Elektrodenstrukturen (6, 7) tragen, welche in Form einer ersten Reihe von m separaten Elektroden (6; $6_l$ bis $6_m$) auf einer Wand (3) und in Form einer zweiten Reihe von n separaten Elektroden (7; $7_l$ bis $7_n$) auf der anderen Wand (4) unter Bildung einer m x n-Matrix aus separat adressierbaren Elementen angeordnet sind, wobei die Zellwände zur Ausrichtung der Flüssigkristallmoleküle (23) an der Zellwandoberfläche entlang einer Orientierungsrichtung (R) und mit einem im wesentlichen gleichen Neigungswinkel zur Oberfläche auf beiden Zellwänden in einer geneigten homogenen Struktur oberflächenbehandelt sind, die Oberflächenorientierung und die natürliche Ganghöhe des Flüssigkristallmaterials (2) so eingerichtet sind, daß sich eine progressive Molekülverdrillung von größer als π und gleich oder kleiner als 3π/2 Radiant über die Schicht (2) mit einer gleichförmigen Neigungsrichtung ergibt, die elastischen und dielektrischen Konstanten des Materials (2) zusammen mit der Oberflächenorientierung und der natürlichen Ganghöhe des Materials (2) so angeordnet sind, daß sich eine scharfe Übertragungsspannungscharakteristik in Kombination mit einer Hysterese von praktisch null ergibt, Treiberschaltungen (8, 9) zum wiederholten Anlegen von Spannungen von einer Spannungsquelle (11) an die Elektroden (6, 7) zur RMS-Multiplex-Adressierung jedes adressierbaren Elements, und einer Logikschaltung (10) zur Steuerung der Treiberschaltungen (8, 9), und welche direkt zwischen einem lichtdurchlässigen AN-Zustand und einem lichtabsorbierenden, lichtundurchlässigen AUS-Zustand schaltbar ist, wobei das Verhältnis der RMS-AN-Spannung V2 zur AUS-Spannung V1 1,165 oder weniger bei 20°C beträgt, und mit n ≥ 40 hochgradig multiplexierbar ist.

**2.** Vorrichtung nach Anspruch 1, wobei die Vorrichtung mindestens einen Polarisator (13) aufweist.

**3.** Vorrichtung nach einem der Ansprüche 1 oder 2 mit im wesentlichen gleich geringen Neigungen an beiden Zellwandoberflächen.

**4.** Vorrichtung nach einem der Ansprüche 1 oder 2 mit im wesentlichen gleich großen Neigungen an beiden Zellwandoberflächen.

**5.** Vorrichtung nach Anspruch 2, die ferner einen Reflektor (16) optisch hinter den Zellwandungen (3, 4) aufweist.

**6.** Vorrichtung nach einem der vorhergehenden Ansprüche, die mit mindestens einer weiteren Vorrichtung nach den Ansprüchen 1 bis 5 optisch in Reihe angeordnet ist und mit unterschiedlich gefärbten Farbstoffen in den unterschiedlichen Vorrichtungen.

**7.** Vorrichtung nach einem der Ansprüche 1 bis 6 mit Temperaturkompensation, die entweder alleine oder in Kombination aufweist:

(a) Flüssigkristallmaterial mit von der Temperatur gering abhängiger oder unabhängiger Ganghöhe oder
(b) Flüssigkristallmaterial mit einer mit steigender Temperatur abnehmender Ganghöhe oder
(c) Einrichtungen zum Abtasten der Kristalltemperatur und zur entsprechenden Veränderung der Spannungspegel.

**8.** Vorrichtung nach einem der Ansprüche 1 bis 7, wobei das Flüssigkristallmaterial (2) eine oberflächeinduzierte Spannung aufweist.

**9.** Vorrichtung nach Anspruch 8, dadurch gekennzeichnet, daß die Werte der natürlichen Ganghöhe (p) des Flüssigkristallmaterials und der Dicke (d) der Schicht so ausgewählt sind, daß sich ein Verhältnis Dicke zu Ganghöhe (d/p), das geringer ist als dasjenige, welches mit der natürlichen cholesterischen Ganghöhe übereinstimmen würde, zur Anpassung an die Verdrillung der Oberflächenorientierung ergibt.

## Revendications

**1.** Dispositif à cristaux liquides incorporant une certaine quantité d'un colorant pléochroïque de manière à faire la distinction entre des états commutés du dispositif, comprenant :

une couche (2) d'une matière à cristaux liquides cholestérique à pas long d'une épaisseur (d) inférieure à 20 μm et d'anisotropie diélectrique positive, qui contient le colorant pléochroïque, le rapport de l'épaisseur (d) de la couche divisée par le pas (p) de la matière (2) à cristaux liquides étant supérieur à 0,5 et inférieur à 0,75, deux parois (3, 4) de cellule portant des structures (6, 7) d'électrodes qui sont disposées sous forme d'une première série de m électrodes séparées (6 ; $6_1$ à $6_m$) sur une première paroi (3) et d'une seconde série de n électrodes séparées (7 ; $7_1$ à $7_n$) sur l'autre paroi (4), formant une matrice m x n d'éléments adressables séparés, les parois de cellule étant traitées en surface pour aligner les molécules (23) des cristaux liquides à la surface des parois de cellule selon une direction d'alignement (R) et avec un angle d'inclinaison sensiblement égal par rapport à la surface sur les deux parois de cellule dans une structure homogène inclinée,
l'alignement des surfaces et le pas naturel de la matière (2) à cristaux liquides étant tels qu'ils donnent une torsion moléculaire progressive supérieure à $\pi$ et égale ou inférieure à 3 $\pi$/2 radians à travers la couche (2), avec une direction uniforme d'inclinaison,
les constantes élastiques et diélectriques de la matière (2), en coopération avec l'alignement des surfaces et le pas naturel de la matière (2) étant tels qu'ils donnent une caractéristique nette de transmission-tension en combinaison avec un phénomène d'hystérésis pratiquement nul,
des circuits (8, 9) de pilotage appliquant répétitivement des tensions provenant d'une source (11) de tension aux électrodes (6, 7) pour adresser par multiplexage RMS chaque élément adressable, et un circuit logique (10) commandant les circuits (8, 9) de pilotage,
et étant commutable directement entre un état actif qui transmet la lumière et un état inactif qui ne transmet pas et absorbe la lumière, dans lequel le rapport des valeurs efficaces RMS de la tension active $V_2$ à la tension inactive $V_1$ est 1,165 ou inférieur à 20°C et est très multiplexable avec n = 40.

**2.** Dispositif selon la revendication 1, comprenant au moins un polariseur (13).

**3.** Dispositif selon l'une des revendications 1 ou 2, ayant des inclinaisons faibles pratiquement égales sur deux surfaces de parois de cellule.

**4.** Dispositif selon l'une des revendications 1 ou 2, ayant des inclinaisons élevées pratiquement égales sur deux surfaces de parois de cellule.

**5.** Dispositif selon la revendication 2, comprenant en outre un réflecteur (16) placé optiquement derrière les parois (3, 4) de cellule.

**6.** Dispositif selon l'une des revendications précédentes, disposé optiquement en série avec au moins un autre dispositif selon l'une des revendications 1 à 5, avec des colorants de couleur différente dans les dispositifs différents.

**7.** Dispositif selon l'une des revendications 1 à 6, ayant une compensation de température qui comprend, seul ou en combinaison :

a) la matière à cristaux liquides ayant une dépendance faible ou nulle du pas avec la température ; ou
b) la matière à cristaux liquides ayant un pas décroissant avec une température croissante ; ou
C) des moyens pour détecter la température de cristaux et modifier les niveaux de tension en conséquence.

**8.** Dispositif selon l'une des revendications 1 à 7, dans lequel la matière (2) à cristaux liquides a une déformation de surface induite.

**9.** Dispositif selon la revendication 8, caractérisé en ce que les valeurs du pas naturel (p) de la matière à cristaux liquides et l'épaisseur (d) de la couche sont choisies pour donner un rapport épaisseur divisée par le pas (d/p) inférieur à celui qui serait adapté au pas cholestérique naturel pour obtenir une adaptation à la torsion d'alignement de surface.

COLUMN DRIVER 9

7₁ 7ₙ

8

6₁

ROW DRIVER

7

1

6ₘ

6

CLOCK 12

CONTROL 10

*Fig.1*

VOLTAGE SOURCE 11

13  4 7 5 6  13

P

R

15

2 3

*Fig.2*

13  3 7 5 6  13

14

P  R

2 4

16

*Fig.3*

## Fig.4

## Fig.5

## Fig.6

0    $\pi/2$    $\pi$    $3\pi/2$

## Fig.7

> SLOW CHANGING VOLTS
>> RAPID CHANGING VOLTS

*Fig.8*

*Fig.9* .

*Fig.10*